# EUROPÄISCHE PATENTSCHRIFT

(11) **EP 3 523 843 B1**
(45) Veröffentlichungstag und Bekanntmachung des Hinweises auf die Patenterteilung: **05.07.2023**
(21) Anmeldenummer: 17784907.2
(22) Anmeldetag: 04.10.2017
(51) Int. Cl.: H01M 10/625, H01M 10/6554, H01M 10/6556, H01M 10/613, H01M 50/24, H01M 50/342, H01M 50/209, H01M 50/222, H01M 50/227, H01M 50/231, H01M 50/276, H01M 50/293, H01M 50/367, H01M 50/503, H01M 10/052, H01M 10/647

(54) **ENERGIESPEICHERSYSTEM**
ENERGY STORAGE SYSTEM
SYSTÈME D'ACCUMULATION D'ÉNERGIE

(30) Priorität: 04.10.2016 DE 102016118753
(43) Veröffentlichungstag der Anmeldung: 14.08.2019
(73) Patentinhaber: Clarios Advanced Solutions GmbH, 30419 Hannover (DE)
(72) Erfinder: BRENNER, Helge, 30453 Hannover (DE); JOSWIG, Ralf, 29690 Buchholz (DE); HOH, Markus, 31515 Wunstorf (DE)
(74) Vertreter: Meissner Bolte Partnerschaft mbB
(86) Internationale Anmeldenummer: PCT/EP2017/075127
(87) Internationale Veröffentlichungsnummer: WO 2018/065438

(56) Entgegenhaltungen:
- DE-A1-102012 205 810
- DE-A1-102013 207 872
- DE-A1-102013 207 872
- FR-A1- 3 014 635
- FR-A1- 3 014 635
- JP-A- 2006 079 909
- US-A1- 2004 137 321
- US-A1- 2015 069 829
- US-A1- 2015 069 829
- US-A1- 2016 141 573
- US-A1- 2016 141 573

## Beschreibung

Diese Anmeldung betrifft ein Energiespeichersystem auf der Basis von Lithium-Ionen-Zellen, insbesondere zum Einsatz in einem Fahrzeug, bevorzugt ein Energiespeichersystem zum Einsatz in einem Hybrid-Fahrzeug.

In den letzten Jahren spielen Energiespeichersysteme, welche auf Lithium-Ionen-Technologien basieren, eine immer wichtigere Rolle, insbesondere im Hinblick darauf, ein effizientes Energiespeichersystem bereitzustellen, welches eine hohe Leistung bringen kann.

Beim Verwenden der Lithium-Ionen-basierten Energiespeichersysteme muss auf eine Abdichtung der die Lithium-Ionen-Technologie enthaltenden Elemente geachtet werden. Dringt nämlich Wasser in derartige Elemente ein, so kann dieses reagieren und es besteht aufgrund von starker Wärmeentwicklung Brand- und Verpuffungsgefahr.

Daher werden Energiespeichersysteme, welche auf Lithium-Ionen-Technologien basieren, herkömmlicherweise derart gefertigt, dass die einzelnen Lithium-Ionen-Zellen einzeln mit einem Zellgehäuse zu ihrer Umgebung hin abgedichtet werden.

Dies weist allerdings den Nachteil auf, dass die Herstellung solcher Energiespeichersysteme vergleichsweise aufwendig ist. Des Weiteren führt dies zu einer Steigerung der Produktionskosten und zu einer Erhohung der Produktionszeit.

DE 10 2012 205 810 A1 offenbart ein Energiespeichersystem zum Einsatz in einem Fahrzeug, das eine Vielzahl von Lithiumzellen mit jeweils einem positiven und einem negativen Pol, ein Gehäuse mit einem Innenraum zum Aufnehmen der Lithiumzellen, wobei das Gehäuse ein Hartschalengehäuse aus Kunststoff ist und eine Öffnung aufweist, und wobei zwischen dem Innenraum und den den Innenraum begrenzenden Innenflächen des Gehäuses eine Dampfsperrschicht angeordnet ist, welche eine Schicht ist die gegenüber von Gasen in einer Umgebungsluft und Gasen die während eines Betriebs des Energiespeichersystems im Innenraum entstehen und gegenüber Feuchtigkeit in der Umgebung undurchlässig ist, sowie eine Abdeckeinrichtung aufweist. Das Gehäuse ist an den Innenflächen mit einer Dampfsperrschicht versehen, welche Eindringen von Feuchtigkeit in das Gehäuseinnere verhindert. Die Dampfsperrschicht kann beispielsweise eine metallische Schicht, organische Schicht /polymere Schicht oder eine gläserne Schicht sein.

FR 3 014 635 A1 offenbart ein Energiespeichersystem für ein Fahrzeug mit einer Vielzahl von Zellen mit einem zweiteiligen, metallischen Gehäuse mit einer Abdeckeinrichtung welches auf der Innenseite eine Barriereschicht aufweist. Der Verbindungsbereich erstreckt sich dabei senkrecht vom Gehäuse weg und ermöglicht eine hermetischen Verschluss durch Verschrauben.

Da ferner zur gesicherten Abdichtung überwiegend metallische Zellgehäuse verwendet werden, erhöht sich dadurch auch das Gesamtgewicht des Energiespeichersystems, was insbesondere in Bezug auf den Einsatz in einem Fahrzeug nicht erwünscht ist.

Der Erfindung liegt daher die Aufgabe zugrunde, ein verbessertes, einfaches und robustes Energiespeichersystem bereitzustellen, welches die Nachteile des Standes der Technik nicht aufweist und zudem einfach und kostengünstig herzustellen ist.

Im Hinblick auf das Energiespeichersystem wird die der Erfindung zugrunde liegende Aufgabe erfindungsgemäß durch den Gegenstand des unabhängigen Patentanspruchs 1 gelöst. Vorteilhafte Weiterbildungen sind in den abhängigen Patentansprüchen angegeben.

Demnach wird erfindungsgemäß ein Energiespeichersystem, insbesondere zum Einsatz in einem Fahrzeug, bevorzugt zum Einsatz in einem Hybrid-Fahrzeug, angegeben. Das Energiespeichersystem weist hierbei Folgendes auf: eine Vielzahl von Lithium-Ionen-Zellen mit jeweils einem positiven Pol und einem negativen Pol, ein Gehäuse mit einem Innenraum zum Aufnehmen der Lithium-Ionen-Zellen, und eine Abdeckeinrichtung. Das Gehäuse ist zumindest bereichsweise, insbesondere vollständig, aus Kunststoff gebildet und weist eine Öffnung auf. Zwischen dem Innenraum und den den Innenraum begrenzenden Innenflächen des Gehäuses ist zumindest bereichsweise, insbesondere vollständig, d.h. auf der gesamten Innenfläche des Gehäuses, eine Barriereschicht angeordnet. Die Abdeckeinrichtung ist derart mit dem Gehäuse verbunden oder verbindbar, dass die Öffnung des Gehäuses verschlossen oder verschließbar ist, sodass die Abdeckeinrichtung zumindest bereichsweise eine Außenfläche des so verschlossenen Gehäuses bildet.

Die Vorteile der Erfindung liegen auf der Hand. Durch das erfindungsgemäße Energiespeichersystem kann das Gehäuse aus kostengünstigen, gut verformbaren Werkstoffen gefertigt werden. Durch das Vorsehen einer Barriereschicht zwischen dem Innenraum und den den Innenraum begrenzenden Innenflächen des Gehäuses ist das Vorsehen einzelner Zellengehäuse für die Lithium-Ionen-Zellen überflüssig. Aufgrund der vorteilhaften Integration der Abdichtungsfunktionalität in das Gehäuse bzw. die Barriereschicht kann die Teileanzahl des Energiespeichersystems vorteilhafterweise reduziert werden. Auch werden dadurch die benötigten Verfahrensschritte zum Herstellen und Zusammensetzen des Energiespeichersystems reduziert. Dadurch kann ein kompaktes, kostengünstiges und robustes Energiespeichersystem bereitgestellt werden, dass zudem einfach zu fertigen ist. Auch werden dadurch die oben genannten Nachteile bezüglich des Gewichts des Energiespeichersystems umgangen. Dadurch, dass das Gehäuse aus einem Kunststoff gefertigt wird, kann überdies das Gesamtgewicht des Energiespeichersystems ferner reduziert werden, und zwar ohne Funktionseinschränkungen, insbesondere ohne Einbußen in der Dichtheit des Energiespeichersystems.

Erfindungsgemäß kann die Öffnung des Gehäuses mit der Abdeckeinrichtung, und zwar mit Hilfe der Barriereschicht, hermetisch verschließbar oder verschlossen sein.

Dadurch wird vorteilhafterweise der Gasaustausch und/oder Flüssigkeitsaustausch bereits auf Gehäuseebene verhindert. Daher sind keine zusätzlichen Schutzvorkehrungen, wie gesonderte Zellgehäuse für die einzelnen Lithium-Ionen-Zellen, mehr nötig. Dadurch kann die Teileanzahl des Energiespeichersystems gering gehalten werden. Zusätzlich werden vorteilhafterweise Funktionalitäten wie das Abdichten gegenüber von Gasen und/oder Flüssigkeiten von der Zellebene auf die Gehäuseebene übertragen.

Gemäß einem weiteren Aspekt der Erfindung kann die Barriereschicht aus mindestens einem der folgenden Materialien gebildet sein: Siliziumoxid, Aluminiumoxid, Silikate, Ethylen-Vinylalkohol-Copolymer, Aluminium und Magnesium.

Dabei handelt es sich um Materialien, die eine geringe Permeabilität und/oder einen niedrigen Permeationskoeffizienten aufweisen. Daher sind solche Materialien vorteilhafterweise undurchlässig gegenüber von Gasen und/oder Flüssigkeiten. Dies verbessert die Dichtheit des Energiespeichersystems. Ferner sind solche Materialien vergleichsweise kostengünstig und gut verarbeitbar.

Erfindungsgemäß ist die Abdeckeinrichtung aus einem metallischen Werkstoff gebildet.

Da auch hier ein Material mit geringer Permeabilität und/oder mit niedrigen Permeationskoeffizienten verwendet wird, wird das Eintreten bzw. Austreten von Flüssigkeiten und/oder Gasen in bzw. aus dem Energiespeichersystem vorzugsweise verhindert. Insbesondere kann die Funktionalität des Abdichtens des Gehäuses in die Abdeckeinrichtung integriert werden. Dies wiederum spart weitere Elemente bzw. weitere Fertigungsschritte ein.

Gemäß einem weiteren Aspekt der Erfindung kann die Barriereschicht zumindest bereichsweise, insbesondere vollständig, mit den Innenflächen des Gehäuses stoffschlüssig verbunden sein, insbesondere auf die Innenflächen des Gehäuses gedampft sein.

Dies liefert den Vorteil, dass der Übergang zwischen Gehäuse und Barriereschicht verbessert wird, was wiederum die Dichtungseigenschaften und die Stabilität des Energiespeichersystems erhöht.

Gemäß einem weiteren Aspekt der Erfindung kann die Barriereschicht zumindest bereichsweise, bevorzugt vollständig, aus einer Folie gebildet sein, welche mit den Innenflächen des Gehäuses verbunden ist, insbesondere stoffschlüssig verbunden ist.

Das Ausbilden der Barriereschicht als Folie führt vorteilhafterweise dazu, dass weniger Defekte innerhalb der Barriereschicht entstehen können, bzw. dass weniger Stelle vorhanden sind, an denen keine Beschichtung erfolgt ist. Daher ist das Vorsehen der Barriereschicht als Folie einfach und sicher.

Erfindungsgemäß ist die mit dem Gehäuse verschweißbar. Dies führt vorteilhafterweise zu einem hermetischen Verschluss des Innenraums des Gehäuses. Das heißt, dass der Innenraum des Gehäuses geschützt ist, und zwar vor dem Eintreten bzw. Austreten von Gasen und/oder Flüssigkeiten aus dem Gehäuse bzw. in das Gehäuse. Ferner ist eine solche stoffschlüssige Verbindung einfach realisierbar und fertigbar.

Erfindungsgemäß weist das Gehäuse einen Verbindungsbereich auf, welcher dazu ausgelegt ist, das Gehäuse mit der Abdeckeinrichtung zu verbinden. Dadurch wird vorteilhafterweise eine einfachere Fertigung des Energiespeichersystems geschaffen.

Erfindungsgemäß erstreckt sich der Verbindungsbereich senkrecht von dem Gehäuse nach außen hin weg, und zwar derart, dass das Gehäuse über den Verbindungsbereich mit der Abdeckeinrichtung verbunden oder verbindbar ist.

Dies liefert den Vorteil, dass der Verbindungsbereich besser zugänglich ist, und dadurch einfacher zu fertigen ist.

Gemäß einem weiteren Aspekt der Erfindung kann der Verbindungsbereich einer Verlängerung einer Wandung des Gehäuses entsprechen, welche äußere Seitenflächen der Abdeckeinrichtung aufnimmt, und zwar derart, dass das Gehäuse über den Verbindungsbereich mit den äußeren Seitenflächen der Abdeckeinrichtung verbunden oder verbindbar ist.

Dies birgt den Vorteil, dass der Verbindungsbereich zum einen über die Aufnahme der äußeren Seitenflächen der Abdeckeinrichtung bereits zentriert ist, und zum anderen gut zugänglich und dadurch einfach zu fertigen ist.

Generell kann das Energiespeichersystem ferner einen Elektronik-Träger aufweisen. Dieser ist dazu ausgelegt, elektronische Komponenten - wie Prozessoren, Speicher, Sensoren und dergleichen - aufzunehmen.

Generell kann das Energiespeichersystem ein Wärmeleitelement aufweisen, welches auf einer Oberfläche der Abdeckeinrichtung in Richtung des Innenraums des Gehäuses angeordnet ist.

Das Wärmeleitelement verbessert die Wärmeableitung bzw. die Wärmeübertragung von dem Innenraum des Gehäuses nach außen hin, und schützt dadurch die im Inneren des Gehäuses angeordneten Elemente aus Kunststoff. Dadurch kann ferner vorteilhafterweise die Effizienz des Energiespeichersystems gesteigert werden.

Generell kann die Abdeckeinrichtung als Kühleinrichtung zur Temperaturregulierung des Energiespeichersystems ausgebildet sein. Dadurch wird vorteilhafterweise die Funktion der Kühlung des Energiespeichersystems in die Abdeckeinrichtung integriert, was dazu führt, dass die Teileanzahl weiter reduziert wird.

Generell kann die Kühleinrichtung eine metallische Kühlplatte aufweisen, insbesondere eine Kühlplatte mit einer Vielzahl von Kühllamellen und Kühlkanälen, wobei die Kühleinrichtung vorzugsweise zumindest bereichsweise, insbesondere vollständig, aus Aluminium und/oder aus einer Aluminiumlegierung gefertigt ist. Dies liefert den Vorteil, dass die Effizienz der Kühleinrichtung gesteigert wird und gleichzeitig ein geringes Gewicht bei guter thermischer Leitfähigkeit erzielt wird.

Generell kann das Energiespeichersystem eine Vielzahl von Stromsammelelementen aufweisen, wobei jeweils ein Stromsammelelement mit einem Pol der Vielzahl von Lithium-Ionen-Zellen verbunden oder verbindbar ist. Dadurch wird eine einfache Ab- bzw. Weiterleitung des Zellenstroms gewährleistet.

Generell kann das Energiespeichersystem mindestens eine Sammelschiene aus einer Vielzahl von Sammelschienenelementen aufweisen. Über die mindestens eine Sammelschiene kann vorteilhafterweise der benötigte Strom bzw. die benötigte Spannung durch eine Reihen- bzw. Parallelschaltung der einzelnen Lithium-Ionen-Zellen relativ einfach eingestellt werden.

Generell kann die Vielzahl von Stromsammelelementen verbindbar mit einer der mindestens einen Sammelschiene ausgebildet sein, bevorzugt nicht lösbar verbindbar und besonders bevorzugt über eine Schweißverbindung verbindbar. Dies liefert den Vorteil, dass ein geringer elektrischer Widerstand im Übergangsbereich von der Vielzahl von Stromsammelelementen zur Sammelschiene austritt, und daher der elektrische Fluss bzw. die elektrische Leitfähigkeit verbessert wird.

Generell kann die Vielzahl von Stromsammelelementen und die mindestens eine Sammelschiene ein Labyrinth ausbilden, welches dazu ausgelegt ist, ein während des Betriebs in der Vielzahl von Lithium-Ionen-Zellen entstehendes Gas in einen Gassammelkanal zu leiten. Dies liefert den Vorteil, dass kein zusätzliches Element bzw. keine zusätzlichen Elemente benötigt werden, um Gas aus den Zellen abzuleiten. Dies führt zu einer Reduzierung der Gesamtteileanzahl im Energiespeichersystem.

Generell kann der Sammelkanal zumindest in einem oberen Bereich des Innenraums des Gehäuses angeordnet sein, bevorzugt in einem oberen und in einem seitlichen Bereich des Gehäuses, wobei der Gassammelkanal insbesondere in das Gehäuse integriert ist.

Dies führt vorteilhafterweise zu einer Reduzierung der Teileanzahl des Energiespeichersystems und darüber hinaus kann das Energiespeichersystem einfacher und kostengünstiger gefertigt werden.

Generell kann eine Membran an dem Gehäuse als Gassammelkanal-Begrenzung vorgesehen sein, vorzugsweise in dem Gehäuse integriert sein, wobei die Membran bevorzugt als Berstmembran ausgebildet ist. Dies führt ebenso vorteilhafterweise zu einer Reduzierung der Teileanzahl des Energiespeichersystems und zu einer einfacheren und kostengünstigeren Fertigung.

Generell kann der Gassammelkanal aus nicht-entflammbarem Material gebildet sein, insbesondere sind Bereiche des Gehäuses, die den Gassammelkanal bilden, aus nicht-entflammbarem Material gebildet.

Dies liefert den Vorteil, dass Bereiche, in denen der Gassammelkanal vorgesehen ist, nicht leicht zu brennen anfangen können. Dadurch wird die Sicherheit des Energiespeichersystems verbessert.

Generell kann das Energiespeichersystem einen Zellenträger aus Kunststoff aufweisen, der dazu ausgelegt ist, die Vielzahl von Lithium-Ionen-Zellen aufzunehmen und diese innerhalb des Gehäuses zu platzieren.

Dies liefert den Vorteil, dass die Herstellung des Energiespeichersystems vereinfacht wird, und zwar dahingehend, dass die Lithium-Ionen-Zellen außerhalb des Gehäuses in dem Zellenträger platziert werden können und anschließend zusammen in das Gehäuse eingeführt werden können ohne jede einzelne Lithium-Ionen-Zelle genau zentrieren und/oder anordnen zu müssen.

Generell kann die mindestens eine Sammelschiene mittels Verstemmen, insbesondere Heißverstemmen, mit dem Zellenträger verbunden sein. Verstemmen oder Heißverstemmen ist eine einfache und kostengünstige Art zwei Elemente aus verschiedenen Materialien miteinander zu verbinden. Dadurch kann das Fertigungsverfahren vereinfacht werden.

Generell kann zwischen dem Zellenträger und der Sammelschiene ein Dichtelement vorgesehen sein. Dadurch wird vorteilhafterweise ein Raum, in dem jeweils eine Lithium-Ionen-Zelle aufgenommen werden kann, zusätzlich abgedichtet. Dadurch verringert sich das Risiko, dass Feuchtigkeit in die Lithium-Ionen-Zelle eindringen kann.

Die Erfindung wird nachstehend, auch hinsichtlich weiterer Merkmale und Vorteile, anhand der Beschreibung von Ausführungsformen unter Bezugnahme auf die beiliegenden Zeichnungen näher erläutert.

Diese zeigen in:
- FIG. 1: eine schematische Darstellung eines Fahrzeugs;
- FIG. 2: eine schematische Darstellung eines Energiespeichersystems gemäß der vorliegenden Erfindung;
- FIG. 3: eine schematische Schnittdarstellung des erfindungsgemäßen Energiespeichersystems;
- FIG. 4: eine schematische Darstellung einer Abdichtung zwischen einem Zellenträger und einer Sammelschiene (nicht Teil der vorliegenden Erfindung); und
- FIG. 5: eine schematische Darstellung eines Gassammelkanals in einem Energiespeichersystem (nicht notwendigerweise Teil der vorliegenden Erfindung).

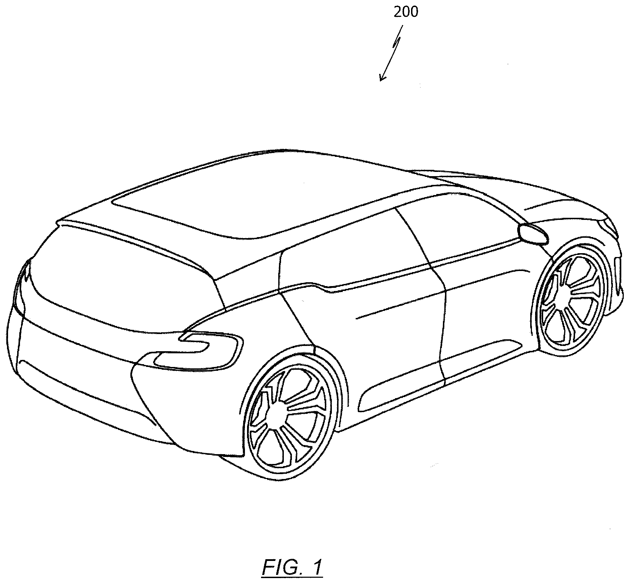

Nachfolgend wird das erfindungsgemäße Energiespeichersystem unter Bezugnahme auf die Darstellungen in den FIGS. 1 bis 5 genauer beschrieben. Gleiche oder gleichwirkende Elemente und Funktionen sind mit demselben oder ähnlichen Bezugszeichen versehen.

Energiespeichersysteme, welche auf Lithium-Ionen-Technologien basieren, eignen sich insbesondere zum Einsatz in Fahrzeugen 200. Des Weiteren kann ein solches Energiespeichersystem 100 ebenfalls überall dort eingesetzt werden, wo Energiespeichersysteme mit einer relativ hohen Leistungsdichte gefordert sind.

Im Folgenden wird das Energiespeichersystem 100 derart beschrieben, dass relative Begriffe auf den Einbau-Zustand des Energiespeichersystems 100 bezogen sind. So bedeutet beispielsweise "in einem oberen Bereich" in einem im eingebauten Zustand gesehenen oberen Bereich, "in einem seitlichen Bereich" in einem im eingebauten Zustand gesehenen Bereich, der sich in einem linken oder rechten Bereich befindet, und "in einem unteren Bereich" in einem im eingebauten Zustand gesehenen unteren Bereich.

FIG. 1 zeigt eine schematische Darstellung eines Fahrzeugs 200, welches mindestens ein Energiespeichersystem 100 mit einer Vielzahl von Lithium-Ionen-Zellen 10 aufweist. Das Energiespeichersystem 100 kann hierbei in einem in Fahrtrichtung vorderen Bereich des Fahrzeugs 200, in einem hinteren Bereich des Fahrzeugs 200 und/oder in einem Bereich unterhalb der Sitze, insbesondere unterhalb des Fahrersitzes angeordnet sein.

Das Fahrzeug 200 kann ein Luft- oder Wasserfahrzeug, ein spurgeführtes Fahrzeug, ein Geländefahrzeug, oder bevorzugt ein Straßenfahrzeug sein, wobei unter Straßenfahrzeug ein Personenkraftwagen, ein Lastkraftwagen, ein Bus oder ein Wohnmobil verstanden werden kann.

Das Fahrzeug 200 wird durch eine Antriebseinheit angetrieben. Die Antriebseinheit kann einen Verbrennungsmotor, einen Elektromotor oder eine Kombination davon umfassen. Ein Fahrzeug 200, welches ausschließlich mit einem Elektromotor angetrieben wird, wird als Elektro-Fahrzeug bezeichnet. Ein Fahrzeug 200, welches sowohl einen Elektromotor, als auch einen Verbrennungsmotor aufweist, wird als Hybrid-Fahrzeug bezeichnet. Hybrid-Fahrzeuge können ferner in Mikrohybrid-Fahrzeuge, Mildhybrid-Fahrzeug, Vollhybrid-Fahrzeuge und/oder Plug-In-Hybrid-Fahrzeuge untergliedert werden. Hierbei kann unter Plug-In-Hybrid-Fahrzeugen jedwedes Hybridfahrzeug verstanden werden, welches nicht nur über den Verbrennungsmotor aufgeladen wird, sondern ebenfalls über das Stromnetz geladen werden kann. Unter Vollhybrid-Fahrzeugen werden Fahrzeuge verstanden, die allein über den Elektromotor angetrieben werden können. Mikrohybrid-Fahrzeuge verfügen über eine Start-Stopp-Funktionalität, und vorzugsweise ebenso über eine Stopp-In-Motion-Funktionalität. Des Weiteren können Mikrohybrid-Fahrzeuge das Energiespeichersystem 100 über eine sogenannte Bremsenergierückgewinnung aufgeladen werden. Mildhybrid-Fahrzeuge können darüber hinaus über eine Boost-Funktion verfügen, welche zur Unterstützung des Verbrennungsmotors zur Leistungssteigerung verwendet wird.

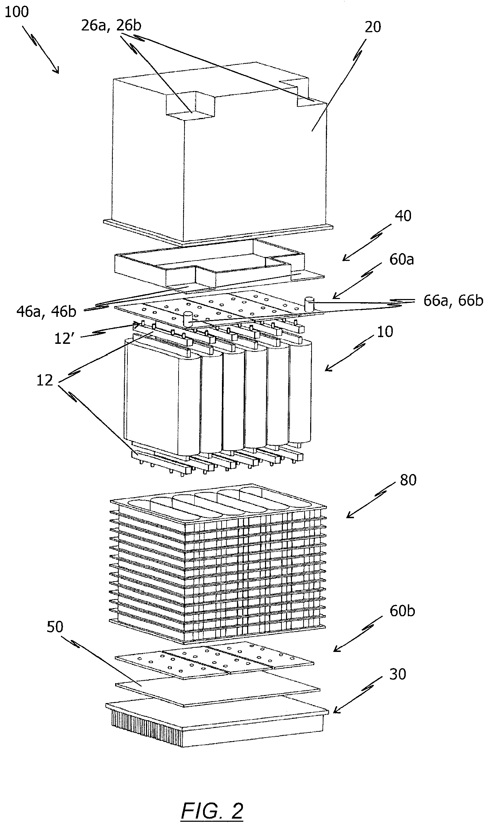

FIG. 2 zeigt eine schematische Explosionsdarstellung eines Energiespeichersystems 100 gemäß der vorliegenden Erfindung. Demnach weist das Energiespeichersystem 100 eine Vielzahl von Lithium-Ionen-Zellen 10 auf, wobei jede Lithium-Ionen-Zelle 10 jeweils einen positiven Pol und einen negativen Pol aufweist.

Die Lithium-Ionen-Zellen 10 können derart ausgebildet sein, dass jeweils der positive Pol und der negative Pol an zwei sich gegenüberliegenden Seiten der Lithium-Ionen-Zelle 10 angeordnet sind.

Jede Lithium-Ionen-Zelle 10 ist als sogenannte Jelly-Roll-Zelle ausgebildet, was vorteilhafterweise mit einer kompakten und platzsparenden Bauweise der Lithium-Ionen-Zellen 10 einhergeht.

Erfindungsgemäß werden die Lithium-Ionen-Zellen 10 ohne eigenes Gehäuse 20 bereitgestellt, was vorteilhafterweise die Material- und Produktionskosten senken kann, da durch das Einsparen des Zellgehäuses ein Produktionsschritt entfällt.

Die Lithium-Ionen-Zellen 10 sind ferner in einem Gehäuse 20 angeordnet. Das Gehäuse 20 ist aus einer Vielzahl von Wandelementen gebildet, welche einen Innenraum formen. Der Innenraum wird durch Innenflächen der Wandelemente des Gehäuses 20 begrenzt. Die Wandelemente des Gehäuses 20 bilden hierbei eine Wandung aus. Ferner weist das Gehäuse 20 eine Öffnung in der Wandung auf, über welche die Lithium-Ionen-Zellen 10 in dem Gehäuse 20 aufnehmbar sind.

Die Öffnung erstreckt sich zumindest bereichsweise über eine Fläche eines Wandelements, vorzugsweise erstreckt sich die Öffnung über die Gesamtfläche eines Wandelements. Das heißt, dass das Gehäuse 20 auf der Seite des einen Wandelements offen ausgebildet ist.

Wie in FIG. 2 schematisch dargestellt, kann das Gehäuse 20 in zwei Eckbereichen Vertiefungen aufweisen, welche insbesondere rechteckig geformt sind. Die Vertiefungen sind jeweils derart ausgebildet, dass deren Bodenflächen elektrische Anschlussflächen 26 ausbilden. Dabei ist eine erste Anschlussfläche 26a als positive Anschlussfläche 26a und eine zweite Anschlussfläche 26b als negative Anschlussfläche 26b ausgebildet. Jeweils eine Anschlussklemme des Energiespeichersystems 100 kann hierbei mit jeweils einer elektrischen Anschlussfläche 26 verbunden werden.

Um das Gehäuse 20 kosteneffizient und einfach, aber dennoch widerstandsfähig fertigen zu können, müssen verschiedene Voraussetzungen eingehalten werden. Zum einen darf das Gesamtgewicht des Energiespeichersystems 100 nicht vergrö-βert werden, um die Effizienz des Energiespeichersystems 100 nicht herabzusetzen. Zum anderen muss der Innenraum des Gehäuses 20 gegenüber der Umgebung dicht abgeschlossen sein, insbesondere hermetisch abgeschlossen sein. Hermetisch hat im Allgemeinen die Bedeutung undurchdringlich. Ein hermetischer Verschluss beschreibt somit einen absolut dichten, insbesondere einen Austausch von Gasen oder Flüssigkeiten verhindernden Abschluss. Unter hermetischem Verschließen des Innenraums des Gehäuses 20 wird daher verstanden, das Gehäuse 20 derart zu verschließen, dass der Innenraum dicht verschlossen ist, und zwar so, dass ein Stoffaustausch, insbesondere der Austausch von Gasen und/oder Flüssigkeiten, verhindert wird. In diesem Zusammenhang wird auch ein Energiespeichersystem, dessen Innenraum nur gegenüber Gasen aus der Umgebungsluft, gegenüber Gasen, die im Betrieb in dem Innenraum des Gehäuses 20 entstehen, und gegenüber Feuchtigkeit aus der Umgebung abgedichtet ist, als hermetisch abgedichtet oder als hermetisch verschlossen bezeichnet.

Um das Energiespeichersystem 100 möglichst leicht zu gestalten, wird erfindungsgemäß ein Gehäuse 20 aus Kunststoff gewählt. Dabei kann beispielsweise ein Acryl-Butadien-Styrol, Polycarbonat, Polyamid, Polyvinylchlorid, Polyethylenterephthalat, Polyoxymethylen oder ein Copolymer hiervon gewählt werden.

Allerdings zeichnen sich Kunststoffe zumindest im Wesentlichen durch eine relativ hohe Permeabilität oder Semipermeabilität gegenüber von Gasen und/oder Flüssigkeiten aus.

Unter Permeabilität wird die Eigenschaft eines Festkörpers verstanden, Gase und/oder Flüssigkeiten passieren zu lassen. Der Transport von Gase und/oder Flüssigkeiten durch den Festkörper wird als Permeation bezeichnet. Die Permeation kann hierbei in die folgenden drei Schritte unterteilt werden, und zwar: die Adsorption, was der Aufnahme des Gases und/oder der Flüssigkeit auf der Oberfläche des Festkörpers entspricht, die Diffusion, was dem Durchdringen des Gases und/oder der Flüssigkeit durch den Festkörper entspricht, und die Desorption, was dem Verlassen oder Ausdringen des Gases und/oder der Flüssigkeit aus dem Festkörper entspricht. Unter Semipermeabilität versteht man die Eigenschaft eines Festkörpers, nur teilweise durchlässig zu sein, d.h. nur Moleküle unterhalb einer bestimmten Molmasse bzw. Kolloide oder Partikel unterhalb einer bestimmten Größe durchzulassen. Im weiteren Verlauf ist unter der Bezeichnung "Permeabilität" sowohl die Permeabilität als auch die Semipermeabilität gemeint.

Daher ist zwischen dem Innenraum des Gehäuses 20 und den den Innenraum begrenzenden Innenflächen des Gehäuses 20 zumindest bereichsweise, bevorzugt auf der gesamten Fläche, eine Barriereschicht 22 angeordnet. Die Barriereschicht 22 ist dazu ausgebildet, den Ein- bzw. Austritt von Gasen und/oder Flüssigkeiten in den bzw. aus dem Innenraum des Gehäuses 20 zu verhindern.

Unter einer Barriereschicht 22 wird im Allgemeinen eine Schicht verstanden, welche relativ gute Barriereeigenschaften aufweist. Unter Barriereeigenschaften wird wiederum keine oder nur eine geringfügige Durchlässigkeit von Gasen und/oder Flüssigkeiten verstanden. Insbesondere wird unter der Barriereschicht 22 eine Schicht verstanden, deren Permeabilität geringer ist als die Permeabilität des Gehäuses 20.

In diesem Zusammenhang ist unter mit dem Begriff "Barriereschicht" eine Schicht gemeint, die gegenüber Gasen in der Umgebungsluft, gegenüber Gasen, welche im Betrieb des Energiespeichersystems 100 in dem Innenraum des Gehäuses 20 entstehen, und gegenüber Feuchtigkeit in der Umgebung undurchlässig ist. Insbesondere wird unter anderem mithilfe einer solchen Barriereschicht der Innenraum des Gehäuses 20 hermetisch von der äußeren Umgebung abgedichtet.

Die Barriereschicht 22 ist hierbei aus Metall und/oder Metalloxid aufgebaut. Das Metall kann ein Leichtmetall sein bzw. aufweisen, insbesondere Aluminium und/oder eine Aluminiumlegierung oder Magnesium und/oder eine Magnesiumlegierung.

Die Barriereschicht 22 kann zumindest bereichsweise mit den Innenflächen des Gehäuses 20 stoffschlüssig verbunden sein, insbesondere kann die Barriereschicht 22 auf die Innenflächen des Gehäuses 20 gedampft sein. Dies geschieht bevorzugt über chemische Gasphasenabscheidung oder physikalische Gasphasenabscheidung.

Ebenso kann die Barriereschicht 22 zumindest bereichsweise, insbesondere vollständig, als Folie ausgebildet sein, welche mit den Innenflächen des Gehäuses 20 verbunden ist. Bevorzugt handelt es sich hierbei um eine Metallfolie, welche stoffschlüssig mit den Innenflächen des Gehäuses 20 verbunden ist.

Alternativ ist es auch denkbar, das Gehäuse 20 derart zu formen, dass ein zwei-oder mehrlagiges Material aus mindestens einer Kunstoffschicht und der Barriereschicht 22 tiefgezogen wird, und zwar derart, dass die Barriereschicht 22 in Richtung des Innenraums des tiefgezogenen Gehäuses 20 angeordnet ist. Somit kann schon das Vormaterial des Gehäuses 20, d. h. das Material aus dem das Gehäuse 20 gefertigt werden soll, mit der Barriereschicht 22 verbunden sein, insbesondere stoffschlüssig verbunden sein, was die Herstellung des Gehäuses 20 vereinfacht und somit zu Kosteneinsparungen und Aufwandsverringerung führen kann. Ferner kann jeder Pol einer Lithium-Ionen-Zelle 10 mit jeweils einem Stromsammelelement 12 verbunden oder verbindbar sein.

Um eine einfachere und genauere Montage der Lithium-Ionen-Zellen 10 zu gewährleisten, können die Lithium-Ionen-Zellen 10 in einem Zellenträger 80 angeordnet sein. Der Zellenträger 80 weist eine Vielzahl von Ausnehmungen auf und ist derart ausgebildet, dass jeweils eine Lithium-Ionen-Zelle 10 in einer Ausnehmung aufgenommen wird. Anschließend können die Lithium-Ionen-Zellen 10 mit Hilfe des Zellenträgers 80 präzise im Innenraum des Gehäuses 20 platziert werden.

Des Weiteren ist in FIG. 2 dargestellt, dass ein Energiespeichersystem 100 mindestens eine Sammelschiene 60a, 60b aus einer Vielzahl von Sammelschienenelementen aufweisen kann. Die Sammelschiene 60a, 60b ist derart mit den Lithium-Ionen-Zellen 10 verbunden, dass die Zellen in Reihe oder parallel geschaltet werden. Eine Reihenschaltung der Lithium-Ionen-Zellen 10 wird dann vorgesehen, wenn eine höhere Betriebsspannung des Energiespeichersystems 100 gefordert ist. Wenn allerdings eine höhere Kapazität des Energiespeichersystems 100 gefordert ist, wird eine Parallelschaltung der Lithium-Ionen-Zellen 10 vorgesehen.

Dabei ist anzumerken, dass die Sammelschiene 60a je ein positives Anschlusselement 66a und ein negatives Anschlusselement 66b aufweist, wie es in FIG. 2 schematisch angedeutet ist.

Des Weiteren kann die Sammelschiene 60a, 60b über die Stromsammelelemente 12 mit den Lithium-Ionen-Zellen 10 verbunden werden. Dies geschieht bevorzugt über eine Schweißverbindung.

Wie in FIG. 2 ferner dargestellt ist, können die Stromsammelelemente 12 zwischen der Sammelschiene 60a, 60b und den Lithium-Ionen-Zellen 10 angeordnet sein. Hierbei kann vorzugsweise jeweils ein Stromsammelelement 12 über eine Steckverbindung mit je einem Pol einer Lithium-Ionen-Zelle 10 verbunden sein. Über eine solche Verbindung können die Stromsammelelemente 12 vorteilhafterweise einfach und schnell verbunden werden. Ebenso ist es denkbar, jeweils ein Stromsammelelement 12 über eine Schweißverbindung mit einem Pol einer Lithium-Ionen-Zelle 10 zu verbinden.

Die Stromsammelelemente 12 können ferner über eine Vielzahl von länglichen Elementen 12', welche auf einer Oberfläche der Stromsammelelemente 12 angeordnet sind, die sich auf einer Seite gegenüberliegend von den Lithium-Ionen-Zellen 10 befindet, mit der Sammelschiene 60a, 60b verbunden werden, und zwar derart, dass sich die länglichen Elemente 12' zumindest bereichsweise durch Ausnehmungen in der Sammelschiene 60a, 60b erstrecken. Vorzugsweise kann jedes längliche Element 12', das sich zumindest bereichsweise durch eine Ausnehmung in der Sammelschiene 60a, 60b erstreckt, mit dieser über eine Schweißverbindung verbunden werden.

Die Sammelschiene 60a, 60b kann ferner mit dem Zellenträger 80 verbunden sein. Vorzugsweise wird die Sammelschiene 60a, 60b mittels Verstemmen, insbesondere Heißverstemmen, mit dem Zellenträger 80 aus Kunststoff verbunden.

Des Weiteren ist es denkbar, die Sammelschiene 60a, 60b formschlüssig mit dem Zellenträger 80 zu verbinden. Hierfür sollte der Zellenträger 80 in ein die Sammelschiene 60a, 60b aufnehmenden Bereich eine Hinterschneidung aufweisen, in die die Sammelschiene 60a, 60b eingesetzt werden kann.

Das Heißverstemmen eignet sich insbesondere für das Verbinden von Komponenten mit unterschiedlichen Materialien. So kann vorteilhafterweise die Sammelschiene 60a, 60b, welche bevorzugt aus Metall, insbesondere Aluminium, einer Aluminiumlegierung, Kupfer oder einer Kupferlegierung, gefertigt ist, mit dem Zellenträger 80 verbunden werden, welcher bevorzugt aus Kunststoff, insbesondere Polyamid, Polyethylenterephthalat, Polycarbonat, Polyoxymethylen und/oder Polyolefine, wie Polypropylen und/oder Polyethylen, gefertigt sein.

FIG. 2 deutet ferner an, dass in einem oberen Bereich des Innenraums des Gehäuses 20 einen Elektronik-Träger 40 vorgesehen sein kann. Der Elektronik-Träger 40 kann hierbei aus Kunststoff ausgebildet sein. Insbesondere eignet sich Kunststoff der Gruppe von Polyamiden, Polyethylenterephthalaten, Polyoxymethylen, Polycarbonaten, Acryl-Butadien-Styrol, Polyolefinen und/oder Polyvinylchloriden. Der Elektronik-Träger 40 ist dazu ausgebildet, in das Gehäuse 20 aufgenommen zu werden.

Der Elektronik-Träger 40 ist zumindest im Wesentlichen aus einem ebenen Bodenelement und einer Wandung geformt, wobei die Wandung derart ausgebildet ist, dass der Elektronik-Träger 40 in den oberen Bereich des Innenraums des Gehäuses 20 aufnehmbar ist, insbesondere derart, dass die Wandung des Elektronik-Trägers 40 der Innenkontur des Gehäuses 20 - und insbesondere der Innenkontur der Vertiefungen - folgt.

Ferner erstrecken sich Kontaktflächen 46 als Verlängerung des Bodenelements in den Bereichen, in welchen die Vertiefungen des Gehäuses 20 aufgenommen werden bzw. aufnehmbar sind. Hierbei ist vorgesehen, dass die Kontaktflächen 46 mit einer ersten Oberfläche jeweils eine Anschlussfläche 26 des Gehäuses 20 elektrisch kontaktieren.

Weiterhin sind die Kontaktflächen 46 insbesondere derart angeordnet, dass die Kontaktflächen 46 mit einer der ersten Oberfläche gegenüberliegenden zweiten Oberfläche jeweils ein Anschlusselement 66a, 66b der Sammelschiene 60a elektrisch kontaktieren.

Der Elektronik-Träger 40 ist in dem Gehäuse 20 des Energiespeichersystems 100 vorgesehen, um eine Vielzahl von elektronischen Vorrichtungen aufnehmen zu können. So kann der Elektronik-Träger 40 beispielsweise Sensoren zur Überwachung einer und/oder mehrerer Lithium-Ionen-Zellen 10 aufweisen, ferner können ebenso ein Mikroprozessor, eine nicht flüchtige Speichereinheit und/oder eine Steuereinheit in dem Elektronik-Träger 40 aufgenommen werden.

Der Elektronik-Träger 40 kann als separates Bauteil in dem Innenraum des Gehäuses 20 vorgesehen sein, was mit einer einfachen Herstellungs- und Anordnungsverfahren einhergeht. Es ist aber auch denkbar, den Elektronik-Träger 40 in das Gehäuse 20 zu integrieren. Hierbei entspricht der Elektronik-Träger 40 zumindest bereichsweise einem Wandelement des Gehäuses 20. Insbesondere ersetzt der Elektronik-Träger 40 ein Wandelement des Gehäuses 20. Dazu wird die Barriereschicht zwischen den Innenflächen der übrigen Wandelemente sowie einer dem Innenraum zugewandten Fläche des Elektronik-Trägers 40 und dem Innenraum angeordnet.

Das erfindungsgemäße Energiespeichersystem 100 ist ferner derart ausgebildet, dass die Öffnung des Gehäuses 20 mit Hilfe der Abdeckeinrichtung 30 verschlossen ist oder verschließbar ist, insbesondere hermetisch verschlossen ist. Hierzu ist die Abdeckeinrichtung 30 verbunden oder verbindbar mit dem Gehäuse 20 ausgebildet, und zwar derart, dass die Abdeckeinrichtung 30 zumindest bereichsweise eine Außenfläche des so verschlossenen Gehäuses 20 bildet.

Vorzugsweise ist die Abdeckeinrichtung 30 als Kühleinrichtung ausgebildet. Die Kühleinrichtung kann eine Vielzahl von Kühlelementen aufweisen und ist dazu ausgelegt, die Temperatur des Energiespeichersystems 100, insbesondere im Innenraum des Gehäuses 20, zu regulieren. Dies beinhaltet sowohl das Ableiten von Wärme, welche während des Betriebs der Lithium-Ionen-Zellen 10 entsteht, als auch gegebenenfalls das Zuführen von Wärme, um eine optimale Betriebstemperatur zu gewährleisten.

Die Kühleinrichtung kann eine metallische Kühlplatte aufweisen. Die metallische Kühlplatte kann ferner eine Vielzahl von Kühllamellen und/oder Kühlkanälen aufweisen.

Die Kühleinrichtung kann aus Aluminium und/oder einer Aluminiumlegierung gefertigt sein.

Auch ist es denkbar, dass eine weitere Barriereschicht 22 auf einer Oberfläche der Abdeckeinrichtung 30 in Richtung des Innenraums vorgesehen ist. Dadurch kann das Gehäuse 20 vorteilhafterweise einfach mit der Abdeckeinrichtung 30 verbunden werden, da die Verbindung idealerweise über Schichten aus dem gleichen Material hergestellt wird. Erfindungsgemäß ist die Abdeckeinrichtung 30 verschweißbar mit dem Gehäuse 20 ausgebildet.

Das Gehäuse 20 des Energiespeichersystems 100 weist ferner einen Verbindungsbereich 24 auf, welcher dazu ausgelegt ist, das Gehäuse 20 mit der Abdeckeinrichtung 30 zu verbinden.

Der Verbindungsbereich 24 erstreckt sich zum einen senkrecht zu dem Gehäuse 20 nach außen hin weg, insbesondere senkrecht zu den die Öffnung umfassenden Wandelementen. Dabei ist zu beachten, dass die Barriereschicht auch entlang des Verbindungsbereiches 24 angeordnet ist, und zwar derart, dass die Barriereschicht nicht unterbrochen ist. Der Verbindungsbereich 24 ist dementsprechend derart angeordnet, dass der Verbindungsbereich 24 zumindest im Wesentlichen parallel zu der Fläche der Abdeckeinrichtung 30 ist, über die das Gehäuse 20 mit der Abdeckeinrichtung 30 verbunden oder verbindbar ist. Dadurch kann die Fertigung, sowie die Montage optimiert werden, da die Fertigungstoleranzen in diesem Fall vergleichsweise größer gewählt werden können. Auch ist der Verbindungsbereich 24 gut zugänglich.

Das Gehäuse 20 kann mittels Schmelzschweißen oder Pressschweißen mit der Abdeckeinrichtung 30 verbunden werden.

Auch wenn dies nicht explizit in den Zeichnungen dargestellt ist, ist es auch denkbar, den Verbindungsbereich 24 derart auszubilden, dass er zumindest im Wesentlichen einer Verlängerung der Wandung des Gehäuses 20 entspricht, wobei der Verbindungsbereich 24 dazu ausgebildet ist, äußere Seitenflächen der Abdeckeinrichtung 30 aufzunehmen. Hierbei wird das Gehäuse 20 über den Verbindungsbereich 24 mit den äußeren Seitenflächen der Abdeckeinrichtung 30 verbunden oder ist mit diesen verbindbar ausgebildet.

Ferner kann in dem Innenraum des Gehäuses 20 des Energiespeichersystems 100 ein Wärmeleitelement 50 vorgesehen sein. Dies kann insbesondere auf der Oberfläche der Abdeckeinrichtung 30 in Richtung des Innenraums angeordnet sein.

Das Wärmeleitelement 50 kann aus thermisch leitfähigen und elektrisch isolierenden Material gefertigt sein. Bevorzugt ist das Wärmeleitelement 50 aus Silikonbasierten Materialien gefertigt.

Das Wärmeleitelement 50 hilft dabei, die während des Betriebs von Lithium-Ionen-Zellen 10 entstehende Wärme aus dem Innenraum des Energiespeichersystems 100 abzuleiten. Dies verbessert die Lebensdauer der eingesetzten Komponenten, insbesondere des Zellenträgers 80 aus Kunststoff. Die Wärmeleitung erfolgt hierbei insbesondere von den Lithium-Ionen-Zellen 10 über die Stromsammelelemente 12 und die Sammelschiene 60a, 60b zu dem Wärmeleitelement 50, und bevorzugt von dem Wärmeleitelement 50 über die Kühleinrichtung nach au-βen.

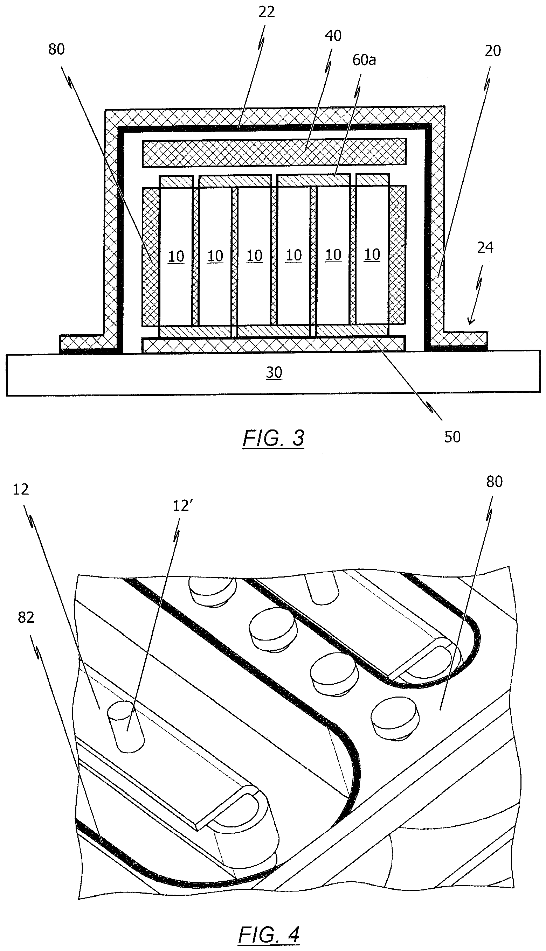

FIG. 3 zeigt eine exemplarische und schematische Darstellung eines erfindungsgemäßen Energiespeichersystems 100 in einer Schnittansicht. Das Energiespeichersystem 100 weist ein Gehäuse 20 aus einer Vielzahl von Wandelementen auf, welches eine Öffnung aufweist, die sich zumindest bereichsweise entlang einer Fläche eines Wandelements erstreckt. In der beispielhaften Darstellung gemäß FIG. 3, erstreckt sich die Öffnung über die gesamte Fläche des unteren Wandelements.

FIG. 3 zeigt ferner einen exemplarischen Verbindungsbereich 24 des Gehäuses 20, welcher sich senkrecht von dem Gehäuse 20 nach außen hin erstreckt, und zwar derart, dass der Verbindungsbereich 24 zumindest im Wesentlichen parallel zu einer oberen Fläche der Abdeckeinrichtung 30 ist, die mit dem Gehäuse 20 verbunden werden soll.

Des Weiteren ist erkennbar, dass eine Barriereschicht 22 zwischen den Innenflächen des Gehäuses 20 und dem Innenraum angeordnet ist, wobei die Barriereschicht 22 sich auch ferner entlang des Verbindungsbereich 24 erstreckt, und zwar so, dass die Barriereschicht 22 an keiner Stelle unterbrochen ist.

Zwischen der Abdeckeinrichtung 30 und der Sammelschiene 60a, 60b ist exemplarisch ein Wärmeleitelement 50 angeordnet, welches dazu ausgelegt ist, die während des Betriebs der Lithium-Ionen-Zellen 10 entstehenden Wärme über die Abdeckeinrichtung 30 nach außen abzuleiten. Die Abdeckeinrichtung 30 ist hierzu vorzugsweise als Kühleinrichtung ausgebildet.

FIG. 4 zeigt eine beispielhafte zusätzliche Abdichtung zwischen einem Zellenträger 80 und einer Sammelschiene 60a eines Energiespeichersystems 100. Hierbei ist ein Dichtelement 82 entlang einer Ausnehmung eines Zellenträgers 80 angeordnet, in welche eine Lithium-Ionen-Zelle 10 aufgenommen werden kann. Wenn nun die Sammelschiene 60a mit dem Zellenträger 80 verbunden wird, wird gleichzeitig die Ausnehmung des Zellenträgers 80 gegenüber dem Innenraum des Energiespeichersystems 100 abgedichtet. Dadurch wird vorteilhafterweise der Betrieb von Lithium-Ionen-Zellen 10 weiterhin erhöht, da ein Eindringen und Ausdringen von Feuchtigkeit und/oder Gasen erschwert wird.

Darüber hinaus ist die Dichtung 82 erforderlich, um den Elektrolyten, insbesondere den flüssigen Elektrolyten, in den Lithium-Ionen-Zellen 10 zu halten, damit insbesondere jede Lithium-Ionen-Zelle 10 einen eigenen, gegen Flüssigkeiten (gegen den Elektrolyten) abgedichteten Zellenraum aufweist. Ansonsten könnte über den Elektrolyten ein Kurzschluss zu erhöhter Selbstentladung der Zellanordnung führen. Aufgrund dieser Dichtung 82 wird vorteilhafterweise das Auslaufen des Elektrolyten verhindert.

Somit können die Sammelschienen 60a, 60b auch zum Abdichten der jeweiligen Zellenräume im Inneren des Zellenträgers 80 verwendet werden, wodurch auf zusätzliche Dichtelemente verzichtet werden kann. Somit wird der Aufbau des Energiespeichersystems 100 weiter vereinfacht.

Beispielsweise kann dabei ein Energiespeichersystem 100 vorgesehen sein, dessen Gehäuse 20 eine Barriereschicht 22 aufweist, welche ausschließlich einen Gasaustausch zwischen dem Innenraum des Gehäuses 20 und einem Außenraum außerhalb des Energiespeichersystems 100 verhindert. Die Dichtung 82 dichtet dabei einen bzw. mehrere Zellenräume, welche von den Ausnehmungen in dem Zellenträger 80 ausgebildet sind, und wobei die Zellenräume dazu ausgebildet sind, jeweils eine Lithium-Ionen-Zelle 10 aufzunehmen, gegen Flüssigkeiten ab.

Besonders bevorzugt weisen die Lithium-Ionen-Zellen 10 hierbei kein eigenes Zellengehäuse auf; vielmehr bildet der Zellenträger 80 das Zellengehäuse. Die Dichtung ist dabei vorteilhafterweise dazu ausgebildet, den Elektrolyten, insbesondere den flüssigen Elektrolyten, im Inneren der Lithium-Ionen-Zellen 10, bzw. den durch die Ausnehmungen in dem Zellenträger 80 gebildeten Zellenräumen, zu halten.

Des Weiteren ist schematisch angedeutet, dass der Zellenträger 80 Lithium-Ionen-Zellen 10 unterschiedlicher Formen aufnehmen kann. Dazu muss der Zellenträger 80 den einzelnen Zellen entsprechende Ausnehmungen aufweisen. Vorzugsweise sind allerdings gleichartige Zellen vorgesehen. Dies führt zu einer einfacheren Fertigung und Montage der Zellen in dem Zellenträger 80.

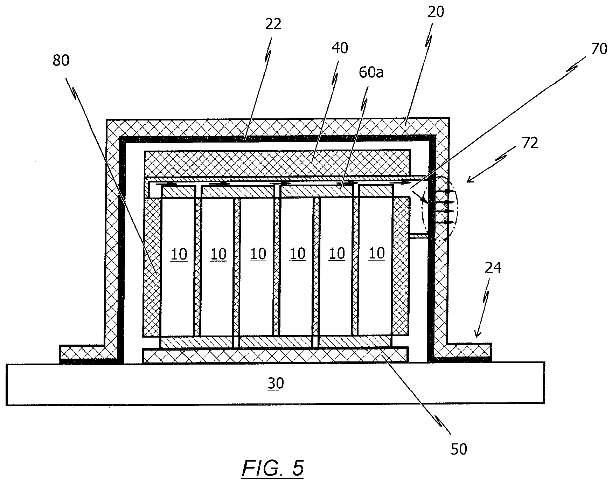

FIG. 5 zeigt eine schematische Darstellung eines Gassammelkanals 70, welcher in einem oberen Bereich des Innenraums des Energiespeichersystems 100 ausgebildet ist. Hierbei kann das aus den einzelnen Lithium-Ionen-Zellen 10 austretende Gas über ein Labyrinth, welches in den Stromsammelelementen 12 und die Sammelschiene 60a, 60b integriert ist, in den Gassammelkanal 70 strömen. Insbesondere ist der Gassammelkanal 70 in einem oberen Bereich des Innenraums des Gehäuses 20 und in einem seitlichen Bereich des Innenraums des Gehäuses 20 angeordnet. Der Gassammelkanal 70 kann genauso gut in das Gehäuse 20 integriert sein. Bevorzugt kann der Gassammelkanal 70 aber auch zwischen dem Zellenträger 80 und dem Elektronik-Träger 40 ausgebildet sein. Der Gassammelkanal 70 kann dabei allen Lithium-Ionen-Zellen 10 zugehörig sein und somit ein gemeinsamer Gassammelraum 70 sein.

Ferner kann eine Membran 72 an dem Gehäuse 20 als Gassammelkanal-Auslass vorgesehen sein. Vorzugsweise ist die Membran 72 in das Gehäuse 20 integriert. Die Membran 72 kann ferner eine Berstmembran sein, welche dazu ausgelegt ist, bei einem relativ hohen Druck zu bersten, insbesondere zu bersten, wenn ein Innendruck einen vorherbestimmten oder bestimmbaren Innendruck übertrifft. Dies führt dazu, dass ein Energiespeichersystem 100 basierend auf Lithium-Ionen-Technologien im schlimmsten Fall kontrolliert kaputtgehen. Dadurch kann die Betriebssicherheit erhöht werden und zudem ein relativ sicheres Austauschen und/oder Entfernen des defekten Energiespeichersystems 100 gewährleistet werden.

Die Integration der Funktionalität der Berstmembran kann auch in das Gehäuse 20 selbst integriert werden, und zwar in das Gehäuse 20 und in die Barriereschicht 22. Dadurch wird vorteilhafterweise die Teileanzahl des Energiespeichersystems 100 geringgehalten, was zu geringeren Herstellungs- und Fertigungskosten führt.

Insbesondere kann die Membran 72 als scheibenförmiges Kunststoff-Bauteil ausgebildet sein, das eine im Wesentlichen flache Unterseite (d. h. Fläche in Richtung Innenraum des Gehäuses 20) und eine profilierte Oberseite (d. h. Fläche in Richtung eines Äußeren des Gehäuses 20) aufweist. Die profilierte Oberseite kann dabei einen erhöhten Mittelbereich und einen erhöhten Randbereich mit erhöhten Materialstärken aufweisen, wobei der (ringförmige) Bereich zwischen dem Mittelbereich und dem Randbereich eine geringere Materialstärke aufweist. Dabei kann die Materialstärke innerhalb des ringförmigen Bereichs stufenlos abnehmen. Auch können der Mittelbereich und der Randbereich die gleiche Materialstärke aufweisen. Genauso gut ist es allerdings denkbar, dass der Randbereich eine dickere Materialstärke aufweist als der Mittelbereich. Die Membran kann dabei insbesondere direkt in das Gehäuse 20 integriert sein. Auch ist es alternativ denkbar, dass die Membran 72 nicht als separates Bauteil ausgebildet ist, sondern dass die Profilierung direkt in das Gehäuse 20 selbst eingebracht ist, und zwar insbesondere in einem Bereich des Gehäuses 20, wo der Gassammelkanal-Auslass vorgesehen ist.

Es ist auch denkbar, das Gehäuse 20 auch ein Metallgehäuse sein mit einer (dünnen) Kunststoffschicht zur elektrischen (und thermischen) Isolation auszubilden. Dadurch kann ein Eintritt von Feuchtigkeit und/oder Gasen und dergleichen in bzw. aus dem Gehäuse verhindert werden, während gleichzeitig eine elektrische (und thermische) Isolation über die Kunststoffschicht gewährleistet werden kann.

### Bezugszeichenliste

- 10: Lithium-Ionen-Zelle
- 12: Stromsammelelement
- 12': längliches Element
- 20: Gehäuse
- 22: Barriereschicht
- 24: Verbindungsbereich
- 26 (26a, 26b): Anschlussflächen
- 30: Abdeckeinrichtung
- 40: Elektronik-Träger
- 46 (46a, 46b): Kontaktflächen
- 50: Wärmeleitelement
- 60a, 60b: Sammelschiene
- 66 (66a, 66b): Anschlusselement
- 70: Gassammelkanal
- 72: Membran
- 80: Zellenträger
- 82: Dichtelement
- 100: Energiespeichersystem
- 200: Fahrzeug

## Patentansprüche

1. Energiespeichersystem (100) zum Einsatz in einem Fahrzeug (200), bevorzugt zum Einsatz in einem Hybrid-Fahrzeug (200), wobei das Energiespeichersystem (100) Folgendes aufweist:
- eine Vielzahl von Lithium-Ionen-Zellen (10) mit jeweils einem positiven Pol und einem negativen Pol, wobei jede der Lithium-Ionen-Zellen (10) ohne Zellengehäuse als Jelly-Roll-Zelle ausgebildet ist;
- ein Gehäuse (20) mit einem Innenraum zum Aufnehmen der Lithium-Ionen-Zellen (10), wobei das Gehäuse (20) zumindest bereichsweise aus Kunststoff gebildet ist und eine Öffnung aufweist, und wobei zwischen dem Innenraum und den den Innenraum begrenzenden Innenflächen des Gehäuses (20) zumindest bereichsweise eine Barriereschicht (22) aus Metall und/oder Metalloxid angeordnet ist, wobei die Barriereschicht (22) eine Schicht ist, die gegenüber von Gasen in einer Umgebungsluft und Gasen, die während eines Betriebs des Energiespeichersystems (100) in dem Innenraum entstehen, und gegenüber Feuchtigkeit in der Umgebung undurchlässig ist; und
- eine Abdeckeinrichtung (30) aus einem metallischen Werkstoff, die mit dem Gehäuse (20) verschweißbar ausgebildet ist,
wobei die Abdeckeinrichtung (30) derart mit dem Gehäuse (20) verschweißbar oder verschweißt ist, dass die Öffnung des Gehäuses (20) verschlossen oder verschließbar ist, und wobei die Abdeckeinrichtung (30) zumindest bereichsweise eine Außenfläche des so verschlossenen Gehäuses (20) bildet,
**dadurch gekennzeichnet, dass**
das Gehäuse (20) einen Verbindungsbereich (24) aufweist, welcher dazu ausgelegt ist, das Gehäuse (20) mit der Abdeckeinrichtung (30) zu verbinden, und entlang welchem die Barriereschicht (22) angeordnet ist, wobei sich der Verbindungsbereich (24) senkrecht von dem Gehäuse (20) nach außen hin weg erstreckt, und zwar derart, dass das Gehäuse (20) über den Verbindungsbereich (24) mit der Abdeckeinrichtung (30) verschweißt oder verschweißbar ist, und
wobei die Öffnung des Gehäuses (20) mit der Abdeckeinrichtung (30) mithilfe der Barriereschicht (22) hermetisch verschließbar oder verschlossen ist.

2. Energiespeichersystem (100) nach Anspruch 1, wobei die Barriereschicht (22) aus mindestens einem der folgenden Materialien gegebildet ist: Siliziumoxid, Aluminiumoxid, Aluminium und Magnesium.

3. Energiespeichersystem (100) nach Anspruch 1 oder 2, wobei die Barriereschicht (22) zumindest bereichsweise mit den Innenflächen des Gehäuses (20) stoffschlüssig verbunden ist, insbesondere auf die Innenflächen des Gehäuses (20) gedampft ist.

4. Energiespeichersystem (100) nach einem der Ansprüche 1 bis 3, wobei die Barriereschicht (22) zumindest bereichsweise aus einer Folie gebildet ist, welche mit den Innenflächen des Gehäuses (20) verbunden ist, insbesondere stoffschlüssig verbunden ist.

5. Energiespeichersystem (100) nach einem der Ansprüche 1 bis 4, wobei der Verbindungsbereich (24) einer Verlängerung einer Wandung des Gehäuses (20) entspricht, welche äußere Seitenflächen der Abdeckeinrichtung (30) aufnimmt, und zwar derart, dass das Gehäuse (20) über den Verbindungsbereich (24) mit den äußeren Seitenflächen der Abdeckeinrichtung (30) verbunden oder verbindbar ist.

6. Energiespeichersystem (100) nach einem der Ansprüche 1 bis 5, wobei das Energiespeichersystem (100) eine Vielzahl von Stromsammelelementen (12) aufweist, wobei jeweils ein Stromsammelelement (12) mit einem Pol der Vielzahl von Lithium-Ionen-Zellen (10) verbunden oder verbindbar ist, und/oder
wobei das Energiespeichersystem (100) mindestens eine Sammelschiene (60a, 60b) aus einer Vielzahl von Sammelschienenelementen aufweist.

7. Energiespeichersystem (100) nach Anspruch 6,
wobei die Vielzahl von Stromsammelelementen (12) verbindbar mit einer der mindestens einen Sammelschiene (60a, 60b) ausgebildet ist, bevorzugt nicht lösbar verbindbar, und besonders bevorzugt über eine Schweißverbindung verbindbar.

## Claims

1. Energy-storage system (100) for use in a vehicle (200), preferably for use in a hybrid vehicle (200),
wherein the energy-storage system (100) has the following:
- a multiplicity of lithium-ion cells (10), each with a positive pole and a negative pole, wherein each of the lithium-ion cells (10) is, without the cell housing, in the form of a Swiss-roll cell;
- a housing (20) with an interior space for receiving the lithium-ion cells (10), wherein the housing (20) is at least regionally formed from plastic and has an opening, and wherein a barrier layer (22) composed of metal and/or metal oxide is at least regionally arranged between the interior space and the inner surfaces, delimiting the interior space, of the housing (20), wherein the barrier layer (22) is a layer which is impermeable to gases in ambient air and gases which arise in the interior space during operation of the energy-storage system (100) and to moisture in the surroundings; and
- a cover device (30) composed of a metallic material which is designed to be weldable to the housing (20),
wherein the cover device (30) is weldable or welded to the housing (20) in such a way that the opening of the housing (20) is sealed or sealable, and wherein the cover device (30) at least regionally forms an outer surface of the housing (20) sealed in this way,
**characterized in that**
the housing (20) has a connecting region (24) which is designed to connect the housing (20) to the cover device (30) and along which the barrier layer (22) is arranged, wherein the connecting region (24) extends outwardly away from the housing (20) in a perpendicular manner, specifically in such a way that the housing (20) is welded or weldable to the cover device (30) via the connecting region (24), and
wherein the opening of the housing (20) is hermetically sealable or sealed by way of the cover device (30) with the aid of the barrier layer (22).

2. Energy-storage system (100) according to Claim 1,
wherein the barrier layer (22) is formed from at least one of the following materials: silicon oxide, aluminium oxide, aluminium and magnesium.

3. Energy-storage system (100) according to Claim 1 or 2,
wherein the barrier layer (22) is at least regionally connected in a materially bonded manner to the inner surfaces of the housing (20), in particular is vapour-deposited on the inner surfaces of the housing (20).

4. Energy-storage system (100) according to one of Claims 1 to 3,
wherein the barrier layer (22) is at least regionally formed from a film which is connected, in particular is connected in a materially bonded manner, to the inner surfaces of the housing (20).

5. Energy-storage system (100) according to one of Claims 1 to 4,
wherein the connecting region (24) corresponds to an extension of a wall of the housing (20) that receives outer side surfaces of the cover device (30), specifically in such a way that the housing (20) is connected or connectable to the outer side surfaces of the cover device (30) via the connecting region (24).

6. Energy-storage system (100) according to one of Claims 1 to 5,
wherein the energy-storage system (100) has a multiplicity of current-collecting elements (12), wherein in each case one current-collecting element (12) is connected or connectable to a pole of the multiplicity of lithium-ion cells (10), and/or
wherein the energy-storage system (100) has at least one busbar (60a, 60b) which is made up of a multiplicity of busbar elements.

7. Energy-storage system (100) according to Claim 6,
wherein the multiplicity of current-collecting elements (12) is designed to be connectable, preferably connectable in a non-releasable manner, and particularly preferably connectable via a welded connection, to one of the at least one busbar (60a, 60b).

## Revendications

1. Système de stockage d'énergie (100) pour utilisation dans un véhicule (200), de préférence pour utilisation
dans un véhicule hybride (200), le système de stockage d'énergie (100) présentant :
- une pluralité de cellules lithium-ion (10) ayant chacune un pôle positif et un pôle négatif, chacune des cellules lithium-ion (10) étant configurée sans boîtier de cellule sous forme de cellule Jelly Roll ;
- un boîtier (20) avec un espace intérieur pour recevoir les cellules lithium-ion (10), le boîtier (20) étant formé au moins par zones en matière plastique et présentant une ouverture, et une couche de barrière (22) en métal et/ou en oxyde métallique étant agencée au moins par zones entre l'espace intérieur et les surfaces intérieures du boîtier (20) qui délimitent l'espace intérieur, la couche barrière (22) étant une couche qui est imperméable aux gaz dans un air ambiant et aux gaz produits dans l'espace intérieur pendant un fonctionnement du système de stockage d'énergie (100), et à l'humidité dans l'environnement ; et
- un dispositif de couverture (30) en un matériau métallique, qui est configuré pour pouvoir être soudé au boîtier (20),
le dispositif de couverture (30) pouvant être soudé ou étant soudé au boîtier (20) de telle sorte que l'ouverture du boîtier (20) est fermée ou peut être fermée, et le dispositif de couverture (30) formant au moins par zones une surface extérieure du boîtier (20) ainsi fermé,
**caractérisé en ce que**
le boîtier (20) présente une zone de liaison (24) qui est conçue pour relier le boîtier (20) au dispositif de couverture (30), et le long de laquelle la couche de barrière (22) est agencée, la zone de liaison (24) s'étendant perpendiculairement vers l'extérieur en s'éloignant du boîtier (20), et ce de telle sorte que le boîtier (20) est soudé ou peut être soudé au dispositif de couverture (30) par le biais de la zone de liaison (24), et
l'ouverture du boîtier (20) pouvant être fermée ou étant fermée hermétiquement avec le dispositif de couverture (30) à l'aide de la couche de barrière (22).

2. Système de stockage d'énergie (100) selon la revendication 1,
la couche de barrière (22) étant formée d'au moins l'un des matériaux suivants : oxyde de silicium, oxyde d'aluminium, aluminium et magnésium.

3. Système de stockage d'énergie (100) selon la revendication 1 ou 2,
la couche de barrière (22) étant reliée par liaison de matière au moins par zones aux surfaces intérieures du boîtier (20), notamment étant vaporisée sur les surfaces intérieures du boîtier (20).

4. Système de stockage d'énergie (100) selon l'une quelconque des revendications 1 à 3,
la couche de barrière (22) étant formée au moins par zones d'une feuille qui est reliée aux surfaces intérieures du boîtier (20), notamment qui est reliée par liaison de matière.

5. Système de stockage d'énergie (100) selon l'une quelconque des revendications 1 à 4,
la zone de liaison (24) correspondant à un prolongement d'une paroi du boîtier (20), qui reçoit des surfaces latérales extérieures du dispositif de couverture (30), et ce de telle sorte que le boîtier (20) est relié ou peut être relié aux surfaces latérales extérieures du dispositif de couverture (30) par le biais de la zone de liaison (24).

6. Système de stockage d'énergie (100) selon l'une quelconque des revendications 1 à 5,
le système de stockage d'énergie (100) présentant une pluralité d'éléments de collecte de courant (12), un élément de collecte de courant (12) étant relié ou pouvant être relié à un pôle de la pluralité de cellules lithium-ion (10), et/ou
le système de stockage d'énergie (100) présentant au moins une barre omnibus (60a, 60b) composée d'une pluralité d'éléments de barre omnibus.

7. Système de stockage d'énergie (100) selon la revendication 6,
la pluralité d'éléments de collecte de courant (12) étant configurée pour pouvoir être reliés à l'une de l'au moins une barre omnibus (60a, 60b), de préférence de manière pouvoir être reliée de manière indissociable, et de manière particulièrement préférée de manière à pouvoir être reliée par l'intermédiaire d'une liaison soudée.
